# EUROPÄISCHE PATENTANMELDUNG

(11) **EP 3 913 792 A1**
(43) Veröffentlichungstag der Anmeldung: **24.11.2021**
(21) Anmeldenummer: 20175738.2
(22) Anmeldetag: 20.05.2020
(51) Int. Cl.: H02P 29/60

(54) **ANORDNUNG, SYSTEM UND VERFAHREN ZUR TEMPERATURERMITTLUNG EINER ELEKTRISCHEN MASCHINE**

(71) Anmelder: Siemens Aktiengesellschaft, 80333 München (DE)
(72) Erfinder: Geyer, Horst, 91058 Erlangen (DE)

(57) **Zusammenfassung**

Die Erfindung betrifft eine Anordnung zum Ermitteln einer Temperatur (T1,T2) einer elektrischen Maschine (4) umfassend eine Versorgungseinheit (2) zum Betreiben der Maschine (4) und eine der Versorgungseinheit (2) zuordbare Recheneinrichtung (3), wobei die Versorgungseinheit (2) und die Recheneinrichtung (3) dazu konfiguriert sind, mittels eines thermischen Modells (TM1,TM2) der elektrischen Maschine (4) eine Temperatur (T1,T2) der elektrischen Maschine (4) zu ermitteln, wobei die Versorgungseinheit (2) und die Recheneinrichtung (3) derart zusammenwirken, dass die Recheneinrichtung (3) zumindest bei Nichtbestromen der Versorgungseinheit (2) die Temperatur (T1,T2) der elektrischen Maschine (4) ermittelt.

## Beschreibung

Die Erfindung betrifft eine Anordnung zum Ermitteln einer Temperatur einer elektrischen Maschine, wobei die Anordnung eine Versorgungseinheit zum Betreiben der Maschine umfasst, wobei die Versorgungseinheit dazu konfiguriert sind, die Temperatur mittels eines thermischen Modells der elektrischen Maschine zu ermitteln.

Außerdem betrifft die Erfindung ein die vorgenannte Anordnung umfassendes System.

Ferner betrifft die Erfindung ein Verfahren zum Ermitteln einer Temperatur einer elektrischen Maschine.

Darüber hinaus betrifft die Erfindung ein Computerprogramm mit zum Ausführen des vorgenannten Verfahrens ausgebildeten Befehlen.

Die Motortemperatur (Rotortemperatur) wird oft in der Software des Umrichters durch ein dort hinterlegtes thermisches Modell berechnet.

Je nachdem, ob der Motor über einen Temperatursensor verfügt oder nicht, wird auf unterschiedliche Starttemperaturen für das thermische Modell zurückgegriffen. Dabei handelt es sich um einen Temperatursensor, der derart am/im Motor angeordnet ist, dass er eine Temperatur ermittelt, die als Ausgangstemperatur für das thermische Modell für die Berechnung der Rotorwicklungstemperatur dient.

Bei Motoren mit/ohne den vorgenannten Temperatursensor kann als Starttemperatur z.B. auf frei parametrierbare Startwerte und/oder festcodierte Startwerte und/oder externe Temperaturen (z.B. (aktuell gemessene) Umgebungstemperaturen) zurückgegriffen werden.

Die Starttemperaturen können sich bei Vektorbetrieb und z.B. Servobetrieb unterscheiden.

Darüber hinaus kann bei Motoren mit dem wie oben beschrieben angeordneten Temperatursensor als Starttemperatur für die Berechnung mit dem thermischen Modell auf die mit dem Temperatursensor aktuell gemessene Temperatur zurückgegriffen werden.

Wird der Motor nun bestromt, so kommt es zu einer Erwärmung in den Motorwicklungen, wobei die Erwärmung durch das thermische Modell des Motors in der Software berechnet werden kann.

Die Berechnung der Motortemperatur ist sehr wichtig, da es für die Regelung wichtig ist, zu wissen, wie warm der Motor ist, um beispielsweise genaue Werte über den Rotorwiderstand erhalten zu können.

Das Problem ist nun, wenn der Umrichter ausgeschaltet wird. Ab diesem Zeitpunkt kann keine Motortemperatur mehr berechnet werden und beim nächsten Einschalten steht keine Information mehr über die aktuelle Temperatur des Motors zur Verfügung.

Bei Motoren ohne den wie oben beschrieben angeordneten Temperatursensor, kann beim Ausschalten des Antriebs z.B. die letzte berechnete Motortemperatur gespeichert werden. Beim erneuten Einschalten des Antriebs kann die Starttemperatur das thermische Motormodell einem Anteil der gespeicherten Motortemperatur (z.B. 90%) gleichgesetzt werden. Somit wird beispielsweise nach einem sehr langen Ausschalten des Antriebs beim Wiedereinschalten mit einer sehr konservativen Starttemperatur für das thermische Modell gerechnet.

Bei Motoren mit dem vorgenannten Temperatursensor kann keine Temperatur der thermischen Strecke zwischen dem Temperatursensor und der Rotorwicklung berücksichtigt werden, welche vor dem Ausschalten berechnet wurde. Die thermische Strecke ist dabei eine Modelltemperatur, welche aufgrund des aktuellen Betriebspunktes des Motors im Umrichter berechnet wird. Die thermische Strecke kann mehrere thermische Widerstände und mehrere thermische Zeitkonstanten umfassen.

Da beispielsweise die Rotorwicklungstemperatur (Rotortemperatur) aus einer Temperatur des wie oben beschrieben angeordneten Temperatursensors und einer thermischen Strecke berechnet werden kann, geht auch hier die Information für die Berechnung der Temperatur mit dem thermischen Modell beim Ausschalten des Umrichters verloren.

Infolgedessen kann es passieren, dass man, wenn der Motor beispielsweise sehr lange (z.B. über Stunden) bestromt wird (d.h. die thermische Strecke ist sehr gut eingeschwungen) und der Umrichter nur ganz kurz (z.B. für Sekunden oder Minuten) ausgeschalten und dann sofort wieder eingeschalten wird, in der Software nicht mehr über die Vergangenheit Bescheid weiß und über keine Informationen betreffend die berechnete thermische Strecke mehr verfügt.

Somit haben beide Verfahren Schwächen, da beide beim Wiedereinschalten nur ungefähre Angaben über die aktuelle Motortemperatur liefern können.

Je nachdem, ob zwischen dem Ausschalten und dem erneuten Einschalten eine lange oder kurze Zeit vergangen ist, kann sich der Motor stark, bzw. kaum abgekühlt haben.

Wie bereits erwähnt, ist es aber für die Güte der Regelung wichtig, eine möglichst genaue Motortemperatur bestimmen zu können.

Ein möglicher Ansatz dem vorgenannten Problem zu begegnen, ist einen Rotortemperatursensor an jener Stelle in dem Motor vorzusehen, von der die Temperaturwerte für die Regelung benötigt werden - beispielsweise direkt in der Rotorwicklung. Beim erneuten Einschalten des Antriebs, kann in diesem Fall auf eine aktuell gemessene Temperatur des Sensors (aktuell gemessene Rotortemperatur) als Starttemperatur zurückgegriffen werden. In einem solchen Fall ist kein thermisches Modell mehr notwendig, da auf die Rotortemperatur Werte direkt zurückgegriffen werden kann. Ein solcher Sensor ist allerdings teuer und müsste aufwändig nach außen geführt werden (z.B. Funk oder Schleifringe), da er sich üblicherweise an einem beweglichen Teil der Maschine befindet.

Die Aufgabe der Erfindung kann somit darin gesehen werden, Anordnung, System und Verfahren bereitzustellen, mit welchen die Genauigkeit der Temperaturermittlung kostensparend verbessert werden kann.

Die oben genannte Aufgabe wird mit einer Anordnung der eingangs genannten Art erfindungsgemäß dadurch gelöst, dass die Anordnung ferner eine der Versorgungseinheit zuordbare Recheneinrichtung umfasst, wobei die Recheneinrichtung dazu konfiguriert ist, mittels eines thermischen Modells der elektrischen Maschine eine Temperatur der elektrischen Maschine zu ermitteln vorzugsweise zu berechnen, wobei die Versorgungseinheit und die Recheneinrichtung derart zusammenwirken, dass die Recheneinrichtung zumindest bei Nichtbestromen der Versorgungseinheit die Temperatur der elektrischen Maschine ermittelt.

Mit anderen Worten wird mit der erfindungsgemäßen Anordnung sichergestellt, dass keine für die Berechnung der Motortemperatur durch das thermische Modell relevante Information beim Ausschalten des Umrichters verloren geht. Beispielsweise, wenn das thermische Modell Informationen zu der berechneten thermischen Strecke enthält, können diese somit beim Wiedereinschalten des Antriebs weiterverwendet werden.

An dieser Stelle sei angemerkt, dass im Zusammenhang mit der vorliegenden Erfindung bei dem "Ermitteln einer Temperatur mittels eines thermischen Modells" mindestens eine Temperatur ermittelt wird. Beispielsweise kann mittels des thermischen Modells eine Rotortemperatur und vorzugsweise zusätzlich eine Stator- und/oder eine Eisentemperatur ermittelt werden. Die Möglichkeit, eine oder mehrere Temperaturen zu ermitteln, hängt davon ab, welches thermische Modell konkret verwendet wird. Beispielsweise wird bei einem 3-Massen-Modell die Rotor-, die Statorwicklung und das Motoreisen als eigene thermischen Massen angenommen, in welchem Fall auch die Stator- und/oder die Eisentemperatur zusätzlich zu der Rotortemperatur ermittelt werden können. Bei einem Ein-Massen-Modell, wird der Motor als eine große thermische Masse angesehen, in welchem Fall angenommen werden kann, dass die Statortemperatur der Rotortemperatur gleich ist.

Dadurch kann die Temperatur der Maschine jederzeit (auch wenn die Versorgungseinheit ausgeschalten wird) bestimmt werden. Somit kann die Versorgungseinheit (bzw. die Antriebs- oder die Regelungseinheit) nach dem Wiedereinschalten auf eine genauere Temperatur zurückgreifen, was zu einer höheren Regelgüte führt. Hierdurch werden genauere Berechnungen von Drehmomenten ermöglicht.

Zudem kann nach dem Wiedereinschalten ein besserer thermischer Schutz der elektrischen Maschine erzielt werden, da die Temperatur im Inneren der elektrischen Maschine, z.B. die Rotortemperatur genauer ermittelt wurde.

Außerdem geht nach dem Ausschalten nicht mehr die Information über die aktuelle Temperatur verloren. Es muss nicht mehr mit sehr konservativen Anfangswerten (90% des letzten gespeicherten Temperaturwertes) gerechnet werden.

Es kann zweckdienlich sein, wenn die Recheneinrichtung über die gleichen thermischen Daten verfügt, wie sie der Versorgungseinheit zur Berechnung der Temperatur der elektrischen Maschine zur Verfügung stehen.

Bei einer Ausführungsform kann vorgesehen sein, dass die Versorgungseinheit und die Recheneinrichtung voneinander baulich getrennt ausgebildet sind.

Es kann vorgesehen sein, dass die Versorgungseinheit einen Umrichter und/oder einen Wechselrichter und/oder einen Frequenzumrichter umfasst, vorzugsweise als ein Frequenzumrichter ausgebildet ist.

Es kann vorteilhaft sein, wenn die Temperatur eine Echtzeit-Temperatur, vorzugsweise eine Echtzeit-Rotortemperatur ist.

Darüber hinaus kann es zweckmäßig sein, wenn die Versorgungseinheit und die Recheneinrichtung derart zusammenwirken, dass bei Bestromen der Versorgungseinheit die Recheneinrichtung oder/und die Versorgungseinheit die Temperatur der elektrischen Maschine ermittelt/ermitteln.

Wenn bei Bestromen der Versorgungseinheit sowohl die Recheneinrichtung als auch die Versorgungseinheit die Temperatur der elektrischen Maschine mittels eines thermischen Modells ermitteln, kann beispielsweise eine Validierung / Überprüfung / ständige Überwachung der Sensortemperatur möglich sein, falls die Maschine einen Temperatursensor aufweist, der beispielsweise derart am/im Motor angeordnet ist, dass er eine Temperatur ermittelt, die als Ausgangstemperatur für das thermische Modell für die Berechnung der Rotorwicklungstemperatur dient. Ein solcher Temperatursensor kann an einem unbeweglichen Teil des Motors angeordnet sein. Beispielsweise kann ein solcher Temperatursensor in dem Wickelkopf im Stator (z.B. B-seitig) angeordnet sein. Auch andere Positionen des Temperatursensors sind denkbar, wie z.B. am Motorgehäuse, innerhalb des Blechpakets oder beim Geber. In Reaktion auf Abweichungen zwischen den seitens der Versorgungseinheit und der Recheneinrichtung gelieferten Temperaturwerten kann ein Benutzer der Maschine über diese Abweichungen informiert/alarmiert werden. Außerdem kann in Reaktion auf die Abweichungen der mittels der Recheneinrichtung ermittelte Temperaturwert für die Regelung der Maschine verwendet werden, falls es z.B. zu einem Defekt des Temperatursensors kommen soll.

Bei einer Ausführungsform kann vorgesehen sein, dass die Recheneinrichtung eine der Versorgungseinheit übergeordnete Steuerung umfasst oder/und zumindest eine Cloud-Komponente, beispielsweise einen Cloud-Server, umfasst.

Ferner kann vorgesehen sein, dass sowohl die Versorgungseinheit als auch die Recheneinrichtung dazu konfiguriert sind, die Temperatur mittels desselben thermischen Modells zu ermitteln, wobei vorzugsweise das thermische Modell auf der Versorgungseinheit und/oder auf der Recheneinrichtung gespeichert ist.

Weitere Vorteile können sich ergeben, wenn die Versorgungseinheit dazu konfiguriert ist, die Temperatur mittels eines ersten thermischen Modells zu ermitteln, und die Recheneinrichtung dazu konfiguriert ist, die Temperatur mittels eines zweiten thermischen Modells zu ermitteln, wobei das zweite thermische Modell detaillierter als das erste thermische Modell ist. Hierdurch wird eine genauere Verifizierung/Überprüfung der in der Versorgungseinheit laufenden Berechnung ermöglicht.

Es kann zweckdienlich sein, wenn die Versorgungseinheit und die Recheneinrichtung über einen Datenübertragungskanal verbindbar, vorzugsweise verbunden sind.

Die Aufgabe der Erfindung wird auch mit einem System der eingangs genannten Art erfindungsgemäß dadurch gelöst, dass das System neben der vorgenannten Anordnung eine elektrische Maschine umfasst.

Es kann vorgesehen sein, dass die elektrische Maschine als eine elektrische rotatorische Maschine, vorzugsweise als ein Motor, beispielsweise als ein Synchron-, Asynchron- oder Reluktanzmotor ausgebildet ist.

Es kann zweckmäßig sein, wenn die Versorgungseinheit an die Maschine angeschlossen ist.

Darüber hinaus kann vorgesehen sein, dass die Maschine einen Temperatursensor umfasst, der derart am/im Motor angeordnet ist, dass er eine Temperatur ermittelt, die als Ausgangstemperatur für das thermische Modell für die Berechnung der Rotorwicklungstemperatur dient. Wie bereits erwähnt kann ein solcher Temperatursensor an einem unbeweglichen Teil des Motors angeordnet sein. Beispielsweise kann ein solcher Temperatursensor in dem Wickelkopf im Stator (z.B. B-seitig) angeordnet sein. Auch andere Positionen des Temperatursensors sind denkbar, wie z.B. am Motorgehäuse, innerhalb des Blechpakets oder beim Geber.

Insbesondere ist der Temperatursensor nicht der vorgenannte Rotortemperatursensor, d.h. ein Sensor, der an jener Stelle in dem Motor angebracht ist, von der die Temperatur für die Regelung benötigt wird, und der eine Berechnung ohne thermisches Modell erlaubt.

Ferner wird die Aufgabe der Erfindung mit einem Verfahren der eingangs genannten Art erfindungsgemäß dadurch gelöst, dass zumindest bei Nichtbestromen einer die elektrische Maschine betreibenden Versorgungseinheit die Temperatur der elektrischen Maschine durch ein thermisches Modell der elektrischen Maschine mittels einer Recheneinrichtung ermittelt wird.

Die auf der Recheneinrichtung berechnete Temperatur kann somit der Versorgungseinheit nach dem Wiedereinschalten zur Verfügung gestellt werden.

Bei einer Ausführungsform kann vorgesehen sein, dass bei Bestromen der Versorgungseinheit die Temperatur der elektrischen Maschine mittels der Recheneinrichtung oder/und mittels der Versorgungseinheit ermittelt wird.

Berechnen die Versorgungseinheit und die Recheneinrichtung die Motortemperatur parallel, so ist somit auch eine Kontrolle der berechneten Temperaturwerte denkbar.

Außerdem kann es zweckdienlich sein, wenn die Versorgungseinheit oder/und die Recheneinrichtung die Temperatur mittels desselben thermischen Modells ermittelt, wobei vorzugsweise das thermische Modell auf der Versorgungseinheit und/oder auf der Recheneinrichtung gespeichert ist.

Weitere Vorteile können sich ergeben, wenn die Versorgungseinheit die Temperatur mittels eines ersten thermischen Modells ermittelt oder/und die Recheneinrichtung die Temperatur mittels eines zweiten thermischen Modells ermittelt, wobei das zweite thermische Modell detaillierter als das erste thermische Modell ist.

Im Folgenden wird die Erfindung anhand der in den Figuren dargestellten Ausführungsbeispiele näher beschrieben und erläutert. Es zeigt:

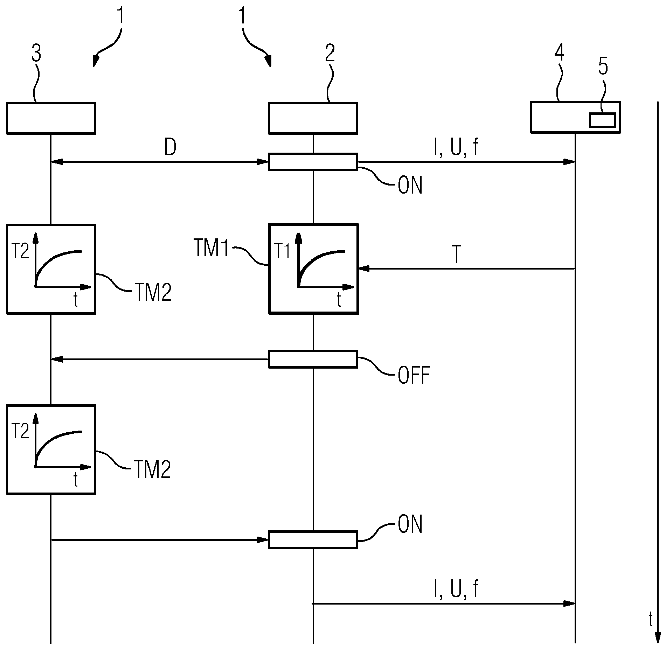

- FIG 1: Anordnung, System und Verfahren zur Temperaturermittlung einer elektrischen Maschine.

FIG 1 zeigt eine Anordnung 1 gemäß einer Ausführungsform der Erfindung. Die Anordnung umfasst eine Versorgungseinheit 2 und eine Recheneinrichtung 3. Die Versorgungseinheit 2 ist von der Recheneinrichtung 3 baulich getrennt ausgebildet.

Die Versorgungseinheit 2 ist als ein Umrichter ausgeführt, der zum Betreiben einer elektrischen Maschine 4 vorgesehen ist. Die elektrische Maschine 4 kann z.B. eine elektrische rotatorische Maschine, insbesondere ein Motor, z.B. ein Synchron, ein Asynchron- oder ein Reluktanzmotor, sein. Auf diesem Wege kann die Versorgungseinheit 2 der Steuerung und Versorgung I, U, f der elektrischen Maschine 4 dienen.

Die Versorgungseinheit 2 kann auch z.B. als ein Wechselrichter, ein Frequenzumrichter ausgebildet sein oder solche umfassen.

Die Recheneinrichtung 3 kann als eine der Versorgungseinheit 2 übergeordnete Steuerung oder als eine Cloud-Komponente, beispielsweise ein Cloud-Recheneinheit, ausgeführt sein oder solche umfassen.

Die Anordnung 1 ist zum Ermitteln, insbesondere zum Berechnen (zumindest) einer Temperatur T1, T2 der elektrischen Maschine 4 eingerichtet und kann ein Teil eines die elektrische Maschine 4 umfassenden Systems zur Ermittlung der Temperatur T1, T2 der Maschine 4 sein.

Die Recheneinrichtung 3 ist der Versorgungseinheit 2 zugeordnet und beispielsweise mit der Versorgungseinheit 2 über einen Datenübertragungskanal verbunden, um Daten D auszutauschen.

Die Versorgungseinheit 2 und die Recheneinrichtung 3 sind dazu konfiguriert die Temperatur bzw. Temperaturwerte T1, T2 der Maschine 4 zu berechnen.

Die Versorgungseinheit 2 kann die Temperatur T1 durch ein erstes, in der Versorgungseinheit 2 gespeichertes/hinterlegtes thermisches Modell TM1 der Maschine 4 berechnen.

Die Recheneinrichtung 3 kann die Temperatur T2 durch ein zweites, in der Recheneinrichtung 3 gespeichertes/hinterlegtes thermisches Modell TM2 der Maschine 4 berechnen.

Die elektrische Maschine 4 kann optional einen Temperatursensor 5 umfassen, der einen für die Berechnung mit dem thermischen Modell TM1, TM2 notwendigen Temperatureingangswert T liefern kann. Der Temperatursensor 5 ist derart am/im Motor angeordnet, dass er eine Temperatur T ermittelt, die als Ausgangstemperatur für das thermische Modell TM1, TM2 für die Berechnung der Rotorwicklungstemperatur dient. Ein solcher Temperatursensor 5 ist vorzugsweise an einem unbeweglichen Teil des Motors angeordnet. Beispielsweise kann ein solcher Temperatursensor 5 in der Statorwicklung an einem B-seitigen Wickelkopf des Motors (B-Seite oder zu Englisch "Non Drive End") angeordnet sein. Bei dieser Anordnung des Temperatursensors 5 kann beispielsweise die thermische Strecke einfach und genau berechnet werden.

FIG 1 lässt erkennen, dass die thermischen Modelle - ein erstes thermisches Modell TM1 und ein zweites thermisches Modell TM2 - unterschiedlich sein können. Sie können aber auch identisch sein.

Die Recheneinrichtung 3 verfügt vorzugsweise über die gleichen thermischen Daten wie sie dem Umrichter 2 zur Berechnung der Motortemperatur T1 zur Verfügung stehen. Diese Daten D kann beispielsweise der Umrichter 2 an die Recheneinrichtung 3 über den Datenübertragungskanal senden.

Der Umrichter 2 und die Recheneinrichtung 3 wirken derart zusammen, dass die Recheneinrichtung 3 zumindest bei Nichtbestromen des Umrichters 2 die Temperatur T2 der elektrischen Maschine 4 ermittelt. Dadurch wird sichergestellt, dass die Temperatur T1, T2 der elektrischen Maschine 4 auch dann berechnet wird, wenn der Umrichter 2 und die Maschine 4 ausgeschaltet sind.

Die Temperatur T1, T2 ist dabei eine (berechnete) aktuelle Temperatur bzw. Echtzeit-Temperatur, vorzugsweise eine Echtzeit-Rotortemperatur.

Während der Umrichter 2 (und vorzugsweise die Maschine 4) in Betrieb (zwischen "ON" und "OFF" in FIG 1) ist (sind), kann die Temperatur T1 beispielsweise ausschließlich durch das (erste) thermische Modell TM1 auf dem Umrichter 2 ermittelt werden.

Eine Zeitentwicklung ist mit einem in der Bildebene nach unten zeigenden, mit "t" beschrifteten Pfeil dargestellt.

Der Umrichter 2 und die Recheneinrichtung 3 können derart zusammenwirken, dass die Berechnung der Temperatur T2 durch die Recheneinrichtung 3 nur dann erfolgt, wenn der Umrichter 2 nicht bestromt wird. Dabei kann der Umrichter 2 beim Ausschalten beispielsweise ein entsprechendes Signal an die Recheneinrichtung 3 senden und die Berechnung der Temperatur an die Recheneinrichtung 3 übergeben, die sogleich die Berechnung der Temperatur stellvertretend für den Umrichter 2 übernimmt.

FIG 1 ist weiters zu entnehmen, dass die Berechnung der Temperatur T2 mittels der Recheneinrichtung 3 auch dann erfolgen kann, wenn der Umrichter 2 bestromt wird und beispielsweise die Temperatur T1 gemäß dem ersten thermischen Modell TM1 berechnet. Dies kann beispielsweise die Kommunikation zwischen dem Umrichter 2 und der Recheneinrichtung 3 vereinfachen.

Durch paralleles Berechnen der Temperatur im Umrichter 2 und in der Recheneinrichtung 3 - egal ob mit dem gleichen thermischen Modell (TM1 = TM2) oder mit unterschiedlichen thermischen Modellen TM1, TM2 - kann beispielsweise eine Validierung / Überprüfung der Sensortemperatur T möglich sein, falls die Maschine den Temperatursensor 5 aufweist. In Reaktion auf Abweichungen zwischen den seitens des Umrichters 2 und der Recheneinrichtung 3 gelieferten Temperaturwerten kann ein Benutzer der Maschine 4 über diese Abweichungen informiert/ alarmiert werden. Außerdem kann in Reaktion auf die Abweichungen der mittels der Recheneinrichtung 3 ermittelte Temperaturwert für die Regelung der Maschine 4 verwendet werden, falls es z.B. zu einem Defekt des Temperatursensors 5 kommen soll.

Das zweite thermische Modell TM2, mit dem die Recheneinrichtung 3 rechnet, kann beispielsweise detaillierter als das erste thermische Modell TM1 sein, mit dem der Umrichter 2 rechnet. Hierdurch wird eine genauere Verifizierung/Überprüfung der in der Versorgungseinheit laufenden Berechnung ermöglicht.

D.h., die mit dem ersten thermischen Modell TM1 berechnete Temperatur T1 (erste Temperatur) kann von der mit dem zweiten thermischen Modell TM2 berechneten Temperatur T2 (zweite Temperatur) abweichen.

Wenn beispielsweise die Berechnung in der Recheneinrichtung 3 parallel zu der Berechnung in dem Umrichter 2 stattfindet, um Rechenzeit auf dem Umrichter 2 zu schonen, kann für den Motor 4 und den Umrichter 2 nur das erste (vereinfachte) thermische Modell TM1 gerechnet werden. Das erste thermische Modell TM1 kann eine genügend hohe Genauigkeit bieten, um den Antrieb 2 (den Umrichter) sicher thermisch zu schützen.

Das Berechnen des detaillierteren zweiten Modells TM2 auf der Recheneinrichtung 3 kann beispielsweise aus dem Grund vorteilhaft sein, dass zusätzlich eine Erwärmung der Sensortemperatur (virtuelle Sensortemperatur) mitberechnet werden kann. Auf diese Weise kann beispielsweise anhand eines aktuellen Betriebspunktes der elektrischen Maschine bestimmt werden, ob die gemessene Sensortemperatur auch passt, d.h. bestimmten Anforderungen entspricht.

Diese virtuelle Sensortemperatur kann daraufhin mit der tatsächlich gemessenen Sensortemperatur verglichen werden. Weichen diese Werte voneinander ab, kann dies - je nachdem wie stark die Abweichung ist - auf einen Defekt des realen Sensors 5 hindeuten.

Daraufhin ist es möglich, dass der Antrieb 2 einen Alarm an einen Benutzer meldet, dass der Motortemperatursensor womöglich defekt sein kann, und/oder die berechnete virtuelle Sensortemperatur für eine weitere Berechnung der Temperatur T2 der Rotorwicklung verwendet wird.

Hierdurch ist es möglich, die Sensortemperatur zu überwachen und auch im Notfall mittels der Recheneinrichtung 3 eine virtuelle Sensortemperatur T2 bereitzustellen.

Ferner kann die mit dem detaillierteren thermischen Modell TM2 berechnete Temperatur T2 ständig/laufend mit der im Antrieb 2 mittels des (einfacheren) thermischen Modells TM1 berechneten Temperatur T1 verglichen werden. Werden nun zu große Abweichungen zwischen den beiden Temperaturen T1 und T2 festgestellt, so kann dies auf eine nicht korrekte Auslegung des vereinfachten Modells TM1 hindeuten. Hierdurch ist es möglich, das erste thermische Modell TM1 zu verbessern.

Somit zeigt FIG 1 eine Ausführungsform eines Systems zur Ermittlung einer Temperatur einer elektrischen Maschine 4, wobei das System die Anordnung 1 und die elektrische Maschine 4 umfasst, wobei der Umrichter 2 der Anordnung 1 an den Motor 4 angeschlossen ist.

Ferner ist FIG 1 eine Ausführungsform eines Verfahrens zum Ermitteln einer Temperatur T1, T2 einer elektrischen Maschine 4 zu entnehmen. Dabei wird, wie bereits beschrieben, zumindest bei Nichtbestromen des die elektrische Maschine 4 betreibenden Umrichters 2 die Temperatur T1, T2 der elektrischen Maschine 4 durch ein thermisches Modell TM1, TM2 mittels der Recheneinrichtung 3 berechnet.

Wenn der Umrichter 2 bestromt wird, kann die Berechnung der Temperatur T1, T2 sowohl auf dem Umrichter 2 als auch auf der Recheneinrichtung 3 berechnet werden.

Wird der Umrichter 2 nach dem Ausschalten "OFF" wieder in Betrieb genommen "ON" kann die auf der Recheneinrichtung 3 berechnete Temperatur T2 auf den Umrichter 2 übernommen werden. Ab diesem Zeitpunkt kann die Berechnung auf dem Umrichter 2 oder/und auf der Recheneinrichtung 3 weiterlaufen. Dies kann beispielsweise von den zur Verfügung stehenden Rechenressourcen, von der Auslastung des Datenverbindungskanals zwischen dem Umrichter 2 und der Recheneinrichtung 3 abhängen usw. usf.

Wie bereits dargelegt, können der Umrichter 2 und die Recheneinrichtung 3 die Temperatur T1, T2 mittels desselben thermischen Modells oder mittels der unterschiedlichen Modelle TM1, TM2 berechnen. Dabei kann das jeweilige thermische Modell TM1, TM2 auf dem Umrichter 2 oder auf der Recheneinrichtung 3, z.B. in einem flüchtigen Speicher des Umrichters 2 und in einem nichtflüchtigen Speicher der Recheneinrichtung 3 gespeichert sein.

Die Recheneinrichtung 3 kann ferner ein Computerprogramm mit Befehlen umfassen, die bewirken, dass z.B. das vorhin beschriebene Verfahren in der Anordnung 1 bzw. in dem System ausgeführt wird. Das Computerprogramm kann z.B. in Form einer Software, z.B. einer Steuerungssoftware oder einer Cloud-App vorliegen.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere kann das beschriebene Verfahren durch Merkmale verbessert werden, die in Bezug auf die Anordnung und/oder das System beschrieben oder beansprucht wurden und *vice versa.*

## Patentansprüche

1. Anordnung zum Ermitteln einer Temperatur (T1,T2) einer elektrischen Maschine (4) umfassend eine Versorgungseinheit (2) zum Betreiben der Maschine (4) und eine der Versorgungseinheit (2) zuordbare Recheneinrichtung (3), wobei die Versorgungseinheit (2) und die Recheneinrichtung (3) dazu konfiguriert sind, mittels eines thermischen Modells (TM1,TM2) der elektrischen Maschine (4) eine Temperatur (T1,T2) der elektrischen Maschine (4) zu ermitteln, wobei die Versorgungseinheit (2) und die Recheneinrichtung (3) derart zusammenwirken, dass die Recheneinrichtung (3) zumindest bei Nichtbestromen der Versorgungseinheit (2) die Temperatur (T1,T2) der elektrischen Maschine (4) ermittelt.

2. Anordnung nach Anspruch 1, wobei die Versorgungseinheit einen Umrichter (2) und/oder einen Wechselrichter und/oder einen Frequenzumrichter umfasst, vorzugsweise als ein Frequenzumrichter ausgebildet ist.

3. Anordnung nach Anspruch 1 oder 2, wobei die Temperatur (T1, T2) eine Echtzeit-Temperatur, vorzugsweise eine Echtzeit-Rotortemperatur ist.

4. Anordnung nach einem der Ansprüche 1 bis 3, wobei die Versorgungseinheit (2) und die Recheneinrichtung (3) derart zusammenwirken, dass bei Bestromen der Versorgungseinheit (2) die Recheneinrichtung (3) oder/und die Versorgungseinheit (2) die Temperatur (T1, T2) der elektrischen Maschine (4) ermittelt/ermitteln.

5. Anordnung nach einem der Ansprüche 1 bis 4, wobei die Recheneinrichtung (3) eine der Versorgungseinheit (2) übergeordnete Steuerung umfasst oder/und zumindest eine Cloud-Komponente, beispielsweise einen Cloud-Server, umfasst.

6. Anordnung nach einem der Ansprüche 1 bis 5, wobei sowohl die Versorgungseinheit (2) als auch die Recheneinrichtung (3) dazu konfiguriert sind, die Temperatur (T1,T2) mittels desselben thermischen Modells (TM1,TM2) zu ermitteln, wobei vorzugsweise das thermische Modell (TM1,TM2) auf der Versorgungseinheit (2) und/oder auf der Recheneinrichtung (3) gespeichert ist.

7. Anordnung nach einem der Ansprüche 1 bis 5, wobei die Versorgungseinheit (2) dazu konfiguriert ist, die Temperatur (T1) mittels eines ersten thermischen Modells (TM1) zu ermitteln, und die Recheneinrichtung (3) dazu konfiguriert ist, die Temperatur (T2) mittels eines zweiten thermischen Modells (TM2) zu ermitteln, wobei das zweite thermische Modell (TM2) detaillierter als das erste thermische Modell (TM1) ist.

8. System umfassend eine elektrische Maschine (4) und eine Anordnung (1) nach einem der Ansprüche 1 bis 7.

9. System nach Anspruch 8, wobei die elektrische Maschine (4) als eine elektrische rotatorische Maschine, vorzugsweise als ein Motor, beispielsweise als ein Synchron-, Asynchron- oder ein Reluktanzmotor ausgebildet ist.

10. System nach Anspruch 8 oder 9, wobei die elektrische Maschine (4) einen Temperatursensor (5) umfasst, wobei der Temperatursensor (5) derart am/im Motor angeordnet ist, dass er eine Temperatur (T) ermitteln kann, die als Ausgangstemperatur für das thermische Modell (TM1,TM2) für die Berechnung der Rotorwicklungstemperatur dient, wobei vorzugsweise der Temperatursensor (5) an einem unbeweglichen Teil der Maschine, beispielsweise wickelkopfseitig in einer Statorwicklung angeordnet ist.

11. Verfahren zum Ermitteln einer Temperatur (T1,T2) einer elektrischen Maschine (4), wobei zumindest bei Nichtbestromen einer die elektrische Maschine (4) betreibenden Versorgungseinheit (2) die Temperatur (T1, T2) der elektrischen Maschine (4) durch ein thermisches Modell (TM1, TM2) der elektrischen Maschine (4) mittels einer Recheneinrichtung (3) ermittelt wird.

12. Verfahren nach Anspruch 11, wobei bei Bestromen der Versorgungseinheit (2) die Temperatur (T1,T2) der elektrischen Maschine (4) mittels der Recheneinrichtung (3) oder/und mittels der Versorgungseinheit (2) ermittelt wird.

13. Verfahren nach Anspruch 11 oder 12, wobei die Versorgungseinheit (2) oder/und die Recheneinrichtung (3) die Temperatur (T1,T2) mittels desselben thermischen Modells (TM1, TM2) ermittelt, wobei vorzugsweise das thermische Modell (TM1,TM2) auf der Versorgungseinheit (2) und/oder auf der Recheneinrichtung (3) gespeichert ist.

14. Verfahren nach Anspruch 12 oder 13, wobei die Versorgungseinheit (2) die Temperatur (T1) mittels eines ersten thermischen Modells (TM1) ermittelt oder/und die Recheneinrichtung (3) die Temperatur (T2) mittels eines zweiten thermischen Modells (TM2) ermittelt, wobei das zweite thermische Modell (TM2) detaillierter als das erste thermische Modell (TM1) ist.

15. Computerprogramm umfassend Befehle, die bewirken, dass eine Anordnung (1) nach einem der Ansprüche 1 bis 7 oder ein System nach einem der Ansprüche 8 bis 10 ein Verfahren nach einem der Ansprüche 11 bis 14 ausführt.
